# EUROPEAN PATENT SPECIFICATION

(11) **EP 3 847 681 B1**
(45) Date of publication and mention of the grant of the patent: **15.11.2023**
(21) Application number: 19766328.9
(22) Date of filing: 05.09.2019
(51) Int. Cl.: H01H 37/72, H01H 37/00, H05B 6/80, A47J 27/21, H01H 37/54

(54) **CONTROL ARRANGEMENTS FOR LIQUID HEATING APPLIANCES**
STEUERUNGSANORDNUNGEN FÜR FLÜSSIGKEITSHEIZGERÄTE
SYSTÈMES DE RÉGULATION DESTINÉS À DES APPAREILS DE CHAUFFAGE DE LIQUIDE

(30) Priority: 05.09.2018 GB 201814457
(43) Date of publication of application: 14.07.2021
(73) Proprietor: Strix Limited, Ronaldsway, Isle of Man IM9 2RG (GB)
(72) Inventor: HOWITT, James, Isle of Man IM9 2RG (GB)
(74) Representative: Dehns
(86) International application number: PCT/GB2019/052480
(87) International publication number: WO 2020/049308

(56) References cited:
- EP-A1- 0 294 920
- EP-A2- 2 374 381
- WO-A1-95/34187
- GB-A- 2 380 063
- US-A- 2 509 008
- US-A- 4 217 482
- US-A- 4 713 522

## Description

The present invention is directed to control arrangements, particularly those for use in liquid heating appliances and for interrupting the electrical power supply to a heater within a liquid heating appliance.

Some liquid heating appliances, such as kettles, typically comprise a heating element arranged to heat a fixed volume of liquid. Some other liquid heating appliances, such as hot water dispensers, typically comprise a so-called flow heater in which a heating element is arranged to heat liquid as it flows through a tube. In both cases, such appliances typically also comprise a control arrangement arranged to ensure that the liquid has reached a specific, pre-set temperature, e.g. boiling, before disconnecting the power supply to the heating element. Furthermore, it is normal for the control arrangement in a liquid heating appliance to include an overheat sensor function so that the power supply to the heating element can be disconnected when an overheat situation is detected.

Some prior art kettles comprise a control arrangement comprising a thermally sensitive actuator in the form of a bimetallic element which deforms once heated to a pre-set temperature and acts to break the electrical circuit within the control arrangement. Such arrangements typically require steam to be ducted from a heated vessel to the control arrangement in order to heat the bimetallic actuator. An example of such arrangements can be seen in the Applicant's earlier application WO 95/34187. As will be appreciated, the provision of ducting increases the number of components within the appliance and can also restrict freedom in the design of the appliance.

Alternative means for detecting the temperature of the heated liquid, within a kettle or being dispensed, include electronic control arrangements in which the temperature of the liquid or heating element is detected by an electronic temperature sensor. The output of such a temperature sensor is typically provided to an electronic control arrangement which electrically cuts the power supply, using an electronic component such as a triac, when a certain temperature is detected. An example of such arrangements can be seen in more detail in the Applicant's earlier applications WO 01/28294 and WO2010/106349. However, as will be appreciated by those skilled in the art, the use of electronic components, such as triacs, in order to achieve the switching function can result in control arrangements which are relatively complicated and expensive.

US 4,217,482 discloses a control circuit useful in commercial cooking appliances having electric heating elements and separate operating and safety controls.

The present invention aims to address or at least mitigate the problems outlined above and thus when viewed from a first aspect provides a control arrangement for controlling an electrical power supply circuit to a heater, for example in a liquid heating appliance, the control arrangement comprising:
a first moveable electrical contact, the first moveable electrical contact mating with a corresponding first fixed electrical contact in the electrical power supply circuit in a closed position and the first moveable electrical contact being separated from the first fixed electrical contact in an open position to interrupt the electrical power supply circuit;
a first thermally sensitive actuator operable at an overheat temperature in an overheat mode of operation to move the first moveable electrical contact from the closed position to the open position; and
an electromechanical solenoid, comprising an inductive coil wrapped around an armature, and a solenoid control arrangement for supplying the electromechanical solenoid with electrical power in an interrupt mode of operation such that the armature operates to move the first moveable electrical contact from the closed position to the open position.

As will be appreciated by those skilled in the art, the provision of an electromechanical solenoid operating to move the first moveable electrical contact from the closed position to the open position effectively breaks the electrical power supply circuit and thus functions at least to switch the power supply to the heater OFF. Advantageously, when compared to the prior art arrangements comprising a thermomechanical switch sensitive to steam, such control arrangements may remove the need for a steam duct for directing steam within the appliance and thus may simplify the appliance design and potentially reduce the associated material and manufacturing costs. Additionally, such control arrangements can be advantageous when compared to electronic control arrangements as an electronic switch such as a triac is not required. This may reduce the overall cost of the control arrangement. As will further be appreciated, the control arrangement effectively switches OFF power to the heater in the interrupt mode and the overheat mode using the same set of electrical contacts.

In order for the heater to be supplied with electrical power, the power supply circuit must be closed, i.e. the first moveable electrical contact must adopt the closed position. A dedicated component may be provided to act on the first moveable electrical contact to move it into the closed position. However, in a preferred set of embodiments, the first moveable electrical contact is provided on a resilient member which tends to bring the first moveable electrical contact into the closed position. As will be appreciated, therefore, in such a set of embodiments, the first moveable electrical contact will naturally rest in the closed position unless acted on by a further component. In a further set of embodiments, the control arrangement further comprises a moveable member which is arranged to act on the resilient member to hold the first moveable electrical contact in the open position. The moveable member may be arranged to be moved into a position which allows the resilient member to move the first moveable electrical contact into the closed position. The resilient member may, for example, comprise a leaf spring. In other embodiments, for example those in which the first moveable electrical contact is not provided on a resilient member, the moveable member may be arranged to move the first moveable electrical contact into the closed position by other means. As will be appreciated by those skilled in the art, in allowing the first moveable electrical contact to move into the closed position, the movement of the moveable member effectively closes the electrical power supply circuit and supplies the heater with electrical power.

In another set of embodiments, in addition or alternatively, the moveable member is further operable to move the first moveable electrical contact into the open position. The moveable member may therefore be operated to break the electrical power supply circuit and thus interrupt the electrical power supply to the heater.

When the armature of the electromechanical solenoid acts in the interrupt mode of operation, it may act independently of the moveable member and act directly on the first moveable electrical contact, or a member extending therefrom, in order to move it from the closed position to the open position. However, in embodiments wherein the moveable member is operable to move the first moveable electrical contact into the open position, it is further preferred that the armature is arranged to act on the moveable member so as to move the first moveable electrical contact from the closed position into the open position. Such a set of embodiments is particularly advantageous as it may allow for more freedom in arranging the electromechanical solenoid within the control assembly.

In a set of embodiments, the control arrangement further comprises a resilient bias acting on the moveable member and arranged such that the moveable member is either resiliently biased into a first position corresponding to the first moveable electrical contact being in the open position or resiliently biased into a second position corresponding to the first moveable electrical contact being in the closed position. The resilient bias may, for example, be provided by the control arrangement comprising a spring member arranged to act on the moveable member, or be an inherent resilient bias provided by the moveable member itself. Such an arrangement is advantageous as the moveable member may hold the first moveable electrical contact in an open position, or allow the first moveable electrical contact to be in the closed position, without requiring any further interaction, e.g. from the electromechanical solenoid, to hold these positions. This effectively forms a 'bi-stable' arrangement. Thus in preferred embodiments the moveable member operates in a bi-stable arrangement between the first and second positions, for example by the resilient bias comprising an over-centre spring arrangement.

In such a set of embodiments, a user may manually move the first moveable electrical contact into the closed position, e.g. through interaction, which may be indirect, with the moveable member. The first moveable electrical contact may then remain in that position, without requiring further force, until either the first thermally sensitive actuator or electromechanical solenoid operates. Once either of these components has operated and moved the first moveable electrical contact into the open position, the stability of the moveable member in the first position (due to the resilient bias) will mean that even if the thermally sensitive actuator resets or the power supply to the electromechanical solenoid is cut, the first moveable electrical contact will remain in the open position, until it is again acted on by a user to move it back into the closed position. Thus a manual reset is required to reconnect the electrical power supply circuit to the heater.

The moveable member may be provided by any suitable member. However, in a preferred set of embodiments, the moveable member comprises a pivotally mounted lever member. The Applicant has recognized that such a pivotally mounted lever member can easily be mounted in the 'bi-stable' arrangement comprising a resilient bias described above. Additionally, a pivotally mounted lever member can be useful as any user-applied force can be amplified thus reducing the amount of force required, for example, to move the first moveable electric contact when it is provided on a resilient member.

In a set of embodiments, the control arrangement further comprises a user operable member arranged to move the moveable member at least to allow the first moveable electrical contact to move to the closed position. In a set of potentially overlapping embodiments, the control arrangement further comprises a or the user operable member arranged to move the moveable member to move the first moveable electrical contact to the closed position. In some embodiments, the user operable member may be arranged to move the moveable member to the second position described above. The user operable member may, therefore, be used to close the electrical power supply circuit and thus supply the heater with electrical power. In a further set of embodiments, the user operable member is also operable to move the moveable member to move the first moveable electrical contact to the open position. In some embodiments, the user operable member may be arranged to move the moveable member to the first position described above. The moveable member may therefore be used as a manual means for disconnecting the power supply, i.e. turning the heater OFF.

The user operable member may be provided by any suitable means. In a set of embodiments, the user operable member is provided by an actuation member arranged to directly actuate the moveable member. The actuation member may extend directly from the moveable member, or be attached thereto by a linkage. Such an arrangement may be relatively simple and thus keep the complexity and cost of the control assembly to a minimum. In an alternative set of embodiments, the user operable member is provided by a push button arranged to act upon the moveable member. The push button may, for example, comprise a resiliently-biased push button arranged such that when a user releases the button it moves back into its original position and no longer acts on the moveable member.

The Applicant has recognized that depending on the type of user operable member, it may not be possible for the user operable member to act on the moveable member in a manner which results in the movement of the first moveable electrical contact into the open position. For example, it may not be possible using a push button to drive the moveable member in two opposite directions. Therefore, in a set of embodiments, the control arrangement further comprises a tactile switch electrically connected to the solenoid control arrangement and arranged such that the user operable member, when operated by a user, causes a change in an output of the tactile switch. The tactile switch may, for example, be of the type that outputs an electrical signal as long as it is acted upon, but when no longer acted upon ceases to provide an electrical signal. In a further set of embodiments, the solenoid control arrangement monitors the output from the tactile switch and depending on the output supplies the electromechanical solenoid with electrical power in the interrupt mode of operation such that the armature operates to move the first moveable electrical contact from the closed position to the open position. As will be appreciated by those skilled in the art, the user operable member may be used to turn ON and OFF the electrical power supply circuit by causing the electromechanical solenoid to operate.

When a user wishes to turn ON the electrical power supply circuit, they may operate the user operable member which acts to move the moveable member such that the first moveable electrical contact moves into the closed position. This will close the electrical power supply circuit. Additionally, in doing so, the user operable member will act on the tactile switch which will provide a first output signal to the solenoid control arrangement. The solenoid control arrangement may register detection of the first output signal but be programmed to ignore the first output signal, e.g. to recognize that this corresponds to manual switch ON. Once the electrical power supply circuit has been closed, a user may release the user operable member, which may move away from the tactile switch, for example if provided by a resiliently-biased push button. If a user subsequently wishes to turn OFF the electrical power supply circuit, e.g. because they have decided that they no longer wish to heat liquid, they may then operate the user operable member again. As described above, this may not act to move the moveable member, however it will act on the tactile switch and cause a further output signal to be provided to the solenoid control arrangement. The solenoid control arrangement may detect the presence of this further output signal and be arranged or programmed to recognize that this corresponds to a user wanting to break the electrical power supply circuit. Accordingly, upon detection of this further output signal, or the cessation of the further output signal, for example after a user releases the user operable member, the solenoid control arrangement may be configured to supply the electromechanical solenoid with electrical power in the interrupt mode of operation i.e. such that the armature operates to move the first moveable electrical contact from the closed position to the open position.

In one or more embodiments, the solenoid control arrangement may comprise a control means arranged to selectively supply power to the electromechanical solenoid. The control means may be an electronic processor (e.g. a microprocessor), or an analog control circuit. In some embodiments, such control means may optionally be arranged to receive the output signals from a tactile switch as described above.

As will be appreciated by those skilled in the art, the interrupt mode of operation described above, which is initiated by a user acting on the user operable member, is just one situation in which the interrupt mode of operation may occur. The solenoid control arrangement may be arranged or programmed to supply the electromechanical solenoid with electrical power based upon on a number of different factors. A control means as mentioned above may make a decision about when to supply the electromechanical solenoid with electrical power. In a set of embodiments, the control arrangement further comprises at least one temperature sensor connected to the solenoid control arrangement. The temperature sensor may be arranged, for example, to be sensitive to a temperature of the heater and/or liquid being heated by the heater. In a set of embodiments, the solenoid control arrangement monitors a sensor output from the temperature sensor and, depending on the sensor output, supplies the electromechanical solenoid with electrical power in the interrupt mode of operation such that the armature operates to move the first moveable electrical contact from the closed position to the open position. The solenoid control arrangement may, for example, monitor the sensor output until it reaches a certain threshold, for example which corresponds to a heated liquid being at a boiling temperature. Accordingly, the interrupt mode of operation may be initiated based on a temperature condition. The temperature sensor may be provided by any suitable means, however in a preferred set of embodiments the temperature sensor is provided by a thermistor, e.g. a negative temperature coefficient (NTC) thermistor.

The Applicant has recognized that the solenoid control arrangement may utilize one or more further and/or different parameters in order to control initiating the interrupt mode of operation and control the electromechanical solenoid. Accordingly, in a set of potentially overlapping embodiments, the solenoid control arrangement is programmed or arranged to supply the electromechanical solenoid with electrical power dependent on the amount of time that has elapsed since closing the electrical power supply circuit. Such a set of embodiments may, for example, be utilized in embodiments wherein the control arrangement is used to control the operation of a heater in a flow heater arrangement wherein it is known that a certain amount of time corresponds to a specific volume of water having been dispensed.

The parameters discussed above, such as temperature and/or time, may be pre-set or predetermined by the solenoid control arrangement. This may be achieved, in some examples, by storing pre-set values for the parameters in a memory associated with an electronic processor. For example, the solenoid control arrangement may always supply the electromechanical solenoid with electrical power when it detects a temperature corresponding to boiling and/or after a predetermined time e.g. 10 seconds has elapsed. However, the Applicant has recognized that it may be advantageous for a user to be able to have increased control over the appliance in which the control arrangement is used. Accordingly, in a set of embodiments, a user input means is operatively connected to the solenoid control arrangement for changing a condition at which the solenoid control arrangement supplies the electromechanical solenoid with electrical power. The condition may correspond, for example, to one or more parameters such as temperature or time. Such a set of embodiments is advantageous as it may allow, for example, a user to change the temperature at which the solenoid control arrangement supplies the electromechanical solenoid with power and thus effectively controls the temperature to which liquid is heated. This may be achieved, in some examples, by the user input means being operatively connected to an electronic processor that decides when to selectively supply power to the electromechanical solenoid.

In various embodiments, the user input means may be an electromechanical input means (such as a knob or dial) or an electronic input means (such as a touchscreen). In a further set of embodiments, in addition or alternatively, the control arrangement further comprises a display. The display may be arranged to display a parameter being changed by the user input means. The user input means may, for example, comprise a potentiometer which may be manually adjusted by a user, for example via a knob or dial. Such an arrangement effectively forms a passive user input means. In addition, or alternatively, the user input means may comprise an electronic input means, for example a button operatively connected to an electronic processor. Such an arrangement effectively forms an active user input means.

The provision of the first moveable electrical contact is sufficient to open and close the electrical power supply circuit to the heater. However, in a set of embodiments the control assembly comprises a second moveable electrical contact, the second moveable electrical contact mating with a corresponding second fixed electrical contact in the electrical power supply circuit in a closed position and the second moveable electrical contact being separated from the second fixed electrical contact in an open position to interrupt the electrical power supply circuit in an open position, and a second thermally sensitive actuator operable at an overheat temperature in the overheat mode of operation to move the second moveable electrical contact. Preferably the second thermally sensitive actuator is operable at a different overheat temperature to the first thermally sensitive actuator. Any of the features of the embodiments described above which interact with the first moveable electrical contact may also equally be applied to the second moveable electrical contact.

In a set of embodiments, the control arrangement comprises a cordless electrical connector part. In further set of embodiments, the control arrangement comprises a base electrical connector part mated with the cordless electrical connector part. In use, the mating between the cordless electrical part and base electrical connector part allows electrical power to be supplied to the electrical power supply circuit. The base electrical connector part may include tabs for electrical connection to a mains power supply cable, or the mains power supply cable may be integrated with the connector part. Typically, the base electrical connector part is mounted in a power base stand for the liquid heating appliance housing the control arrangement.

The cordless electrical connector part and corresponding base electrical connector part may be of the type that can be mated regardless of their relative angular orientation, or at least through a wide angular range, e.g. at least 340° and preferably up to 360°. Suitable cordless connectors of this "360° type" are described in WO95/08024 and WO01/28294, and available as the Strix P72 or P76 connector sets.

The cordless electrical connector part may comprise at least two mating conductors, for connecting to the live and neutral poles of the power supply circuit. An additional earth connection may optionally be present. In some embodiments, the cordless electrical connector part is a 3-pole connector part (e.g. for mating with a Strix P72). In other embodiments, the cordless electrical connector part is a 5-pole connector part (e.g. for mating with a Strix P76). Such 5-pole connector parts provide for electronic signal connection as well as electrical power connection. In such embodiments, the solenoid control arrangement may be located in the power base stand while the electromechanical solenoid is located in the cordless appliance.

In a set of embodiments, the control arrangement further comprises a dedicated power supply for providing electrical power to the electromechanical solenoid and solenoid control arrangement. In an alternative set of embodiments, the electromechanical solenoid and solenoid control arrangement are connected within the electrical power supply circuit such that they are provided with electrical power from the power supply circuit.

The control arrangement may be electrically connected to a mains, e.g. 240 V, A.C. electrical power supply and thus it may be necessary to 'step-down' the voltage for the electromechanical solenoid and solenoid control arrangement. Therefore, according to a further aspect of the invention, there is provided a liquid heater arrangement comprising a control arrangement according to any of the embodiments described above, a heater comprising a first electrical heating element comprising a first pair of electrical terminations, and a resistive element comprising a second pair of electrical terminations, wherein the resistive element is connected electrically in series with the first electrical heating element by an electrical connection between one of the first pair of electrical terminations and one of the second pair of electrical terminations, wherein the first electrical heating element has a first resistance and the resistive element has a second resistance different to the first resistance, and wherein the electromechanical solenoid and solenoid control arrangement are electrically connected between one of the first or second pairs of electrical terminations i.e. across the heating element or across the resistive element.

The Applicant has recognized that connecting a resistive element, having a difference resistance, in series with the first electrical heating element means that the electromechanical solenoid and solenoid control arrangement can be connected in parallel with the resistive element and supplied with a different voltage and power to the first electrical heating element. This may help to avoid the need for complicated control electronics. The resistive element may comprise a second electrical heating element. The second resistance may be lower than the first resistance.

The electromechanical solenoid and associated solenoid control arrangement may require DC current. Accordingly, in a further set of embodiments at least one AC-DC converter is provided in series with the electromechanical solenoid and/or the solenoid control arrangement.

The control arrangement or liquid heater assembly described above may be utilized in a variety of different liquid heating appliances, particularly domestic liquid heating appliances. According to a further aspect of the present invention there is provided a liquid heating appliance comprising a vessel with a base heated by a heater and a control arrangement as described above mounted under the heated base and arranged to control an electrical power supply circuit to the heater. In one or more embodiments, the heater is arranged in a liquid heater arrangement as described above.

According to a further aspect of the present invention there is provided a liquid heating appliance comprising a liquid flow heater, the liquid flow heater comprising a heater and a liquid flow tube, and a control arrangement as described above arranged to control an electrical power supply circuit to the heater. In one or more embodiments, the heater is arranged in a liquid heater arrangement as described above.

Some preferred embodiments of the present invention will now be described, by way of example only, and with reference to the accompanying drawings, in which:
Fig. 1: shows an electrical power supply circuit comprising a control arrangement in accordance with an embodiment of the present invention;
Fig. 2: shows the electrical power supply circuit seen in Fig. 1 with the first and second moveable electrical contacts in the closed position;
Fig. 3: shows an alternative power supply circuit in which an alternative user operable member is provided;
Fig. 4: shows a perspective view of a control arrangement in accordance with an embodiment of the present invention;
Fig. 5: shows an underside view of the control arrangement seen in Fig. 4; and
Fig. 6: shows a perspective view of the control arrangement seen in Fig. 4 with the main body removed to reveal the inner components of the control arrangement.

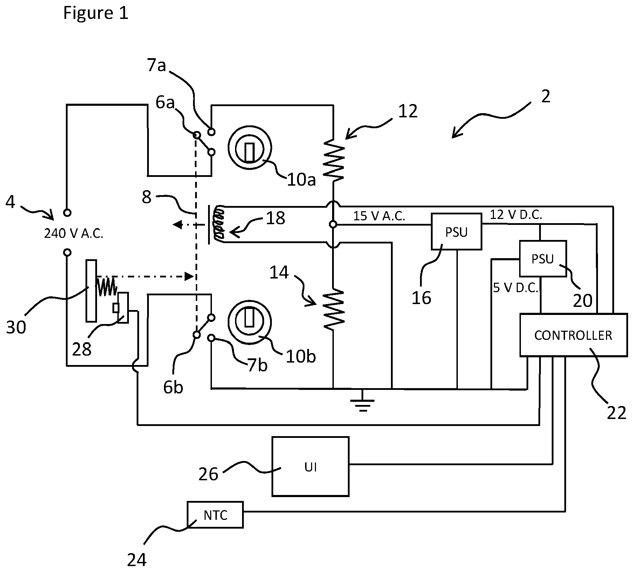

Figure 1 shows an electrical power supply circuit 2 of a liquid heating appliance incorporating a control arrangement in accordance with some embodiments of the present invention. The electrical power supply circuit 2 is provided with a 240 V A.C. power source 4. The control arrangement comprises a first moveable electrical contact 6a and a corresponding first fixed electrical contact 7a. In this particular embodiment, the control arrangement further comprises a second moveable electrical contact 6b and a corresponding second fixed electrical contact 7b. The control arrangement further comprises a moveable member 8 that is arranged to allow the first and second moveable electrical contacts 6a, 6b to move into contact with the corresponding first and second fixed electrical contacts 7a, 7b. The first and second moveable electrical contacts 6a, 6b may comprise an electrical contact arranged on a leaf spring which acts to drive the first and second moveable electrical contacts 6a, 6b into the closed position once the moveable member 8 has been moved to permit this movement. The moveable member 8 is also arranged such that its movement is capable of moving the first and second moveable electrical contacts 6a, 6b out of contact with the first and second fixed electrical contacts 7a, 7b, i.e. into the open position.

The control arrangement further comprises a first thermally sensitive actuator 10a operable at an overheat temperature, in an overheat mode, to operate on the first moveable electrical contact 6a and move it into its open position. The control arrangement also further comprises a second thermally sensitive actuator 10b also operable at an overheat temperature in an overheat mode to operate on the second moveable electrical contact 6b and move it into its open position. Of course the first and second thermally sensitive actuators 10a 10b, need not act on the first and second moveable electrical contacts directly, instead, for example, they may act on the moveable member 8 in order to move the first and second moveable electrical contacts 6a, 6b into the open position.

Connected electrically in series is an electrical heating element 12 of a heater, which may for example be provided as a sheathed electrical resistance element. Also provided electrically in series is a resistive element 14. The resistive element 14 may be provided by any suitable means, for example another sheathed electrical resistance element. The heating element 12 and resistive element 14 may have the same electrical resistance or each have a different resistance. In this particular embodiment, the heating element 12 and resistive element 14 form a potential divider which divides 15 V A.C., however this is not essential and any suitable voltage may be divided. Connected in parallel across the resistive element 14 is a first power supply unit (PSU) 16 which provides an output of 12 V D.C. which provides electrical power to an electromechanical solenoid 18. As depicted, the electromechanical solenoid 18 (and in particular its armature) is arranged to act upon the moveable member 8 such that it can act on the moveable member 8 to move the first and second moveable electrical contacts 6a, 6b into an open position, i.e. to separate the first and second moveable electrical contacts 6a, 6b from the corresponding first and second fixed electrical contacts 7a, 7b.

A second PSU 20 is connected electrically in series with the first PSU 16 and outputs 5 V D.C. to a solenoid control arrangement in the form of a controller 22. The controller 22 serves to selectively supply electrical power to the electromechanical solenoid 18, i.e. it switches a power supply to the electromechanical solenoid 18 ON and OFF. The controller 22 may be provided by any suitable means, e.g. by analog electrical circuitry or by a processor.

Also provided is a temperature sensor in the form of a negative temperature coefficient (NTC) thermistor 24 which is electrically connected to the controller 22. Of course any type of temperature sensor which outputs a signal corresponding to the detected temperature may be used. A user interface (Ul) 26 is also electrically connected to the controller 22. The Ul may allow for input and output of information to/from the controller 22. A tactile switch 28 is also electrically connected to the controller 22 and provides a further input to the controller 22.

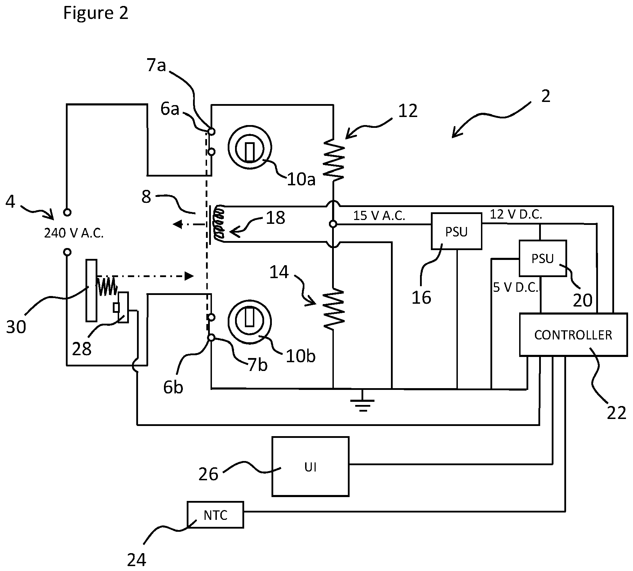

A resiliently-biased push button 30 is also provided and is arranged such that it can operate the moveable member 8 to move the first and second moveable electrical contacts 6a, 6b, towards the first and second fixed electrical contacts 7a, 7b i.e. into the closed position (as can be seen in Figure 2). The push button 30 is also arranged such that when depressed it acts on the tactile switch 28 to provide a signal to the controller 22.

In Figure 1, the first and second moveable electrical contacts 6a, 6b are in the open position. Figure 2 shows the same power supply circuit 2 as that seen in Figure 1, with the difference being that the first and second moveable electrical contacts 6a, 6b are shown in the closed configuration in which they are in contact with the first and second fixed electrical contacts 7a, 7b.

Operation of the control arrangement within the electrical power supply circuit 2 will now be described. When a user wishes to turn the heating element 12 on, e.g. to heat the contents of a liquid heating appliance or dispense a volume of heated liquid, the electrical supply circuit 2 must first be closed in order to provide power to the heating element 12. In the embodiment seen in Figures 1 and 2, this is achieved by a user pressing the push button 30. When a user depresses the push button 30 this will act on the moveable member 8 to move it to a position that allows the first and second moveable contacts 6a, 6b to move into a closed position in contact with the first and second fixed electrical contacts 7a, 7b. Once in this closed position, as seen in Figure 2, the heating element 12 will be provided with electrical power and will begin to generate heat.

Depression of the push button 30 will also act on the tactile switch 28 which will cause an electrical signal to be provided to, and detected by, the controller 22. The controller 22 may comprise appropriate circuitry or be programmed so as to register this electrical signal but not necessarily act upon it. When a user releases the push button 28, due to its resilient nature, it will move back to its original position and no longer act on the moveable member 8 or the tactile switch 28. This will result in the cessation of the electrical signal provided by the tactile switch, which may also be registered by the controller 22. The appliance in which the electrical supply circuit 2 is arranged may then proceed to operate as normal.

The thermistor 24 may be arranged, for example, to monitor the temperature of a liquid which is being heated by the heating element 12 in the appliance. The controller 22 may monitor the output of the thermistor 24. When the temperature of the liquid reaches a desired temperature, for example boiling, the controller 22 may note the signal provided by the thermistor 24, and switch ON the electrical power supply to the electromechanical solenoid 18. This will cause the electromechanical solenoid 18 to operate and the armature thereof to drive the moveable member 8 to separate the first and second electrical contacts 6a, 6b from the first and second fixed electrical contacts 7a, 7b moving them into the open position, as seen in Figure 1. As soon as the first and second moveable electrical contacts 6a, 6b, are separated from the first and second electrical contacts 7a, 7b, the electrical supply circuit 2 will be broken and any electrical power supply to the heating element 12 and also the electromechanical solenoid 18, will be stopped. This mode corresponds to an interrupt mode of operation in which the power supply circuit 2 is interrupted and thus heating is interrupted.

A user may wish to cease operation of the heating operation, for example because they no longer wish to heat and/or dispense liquid, before the controller 22 automatically decides to interrupt the electrical power supply circuit 2. In this particular embodiment, this may be achieved by a user depressing the push button 30 again. This second depression will not cause any further movement of the moveable member 8, however the push button 30 will act on the tactile switch 28 and provide a second electrical signal to the controller 22. Upon detection of this second electrical signal, or upon a second detection of it stopping, e.g. due to a user releasing the push button 30, the controller 22 may be arranged or programmed to provide electrical power to the electromechanical solenoid 18. In doing so, the electromechanical solenoid 18 will again act on the moveable member 8 to separate the first and second moveable electrical contacts 6a, 6b from the first and second fixed electrical contacts 7a, 7b. As above, this will cut the power supply to the heating element 12 and thus cease operation of the appliance. This effectively provides an alternative interrupt mode of operation which is initiated by the user.

A further mode of operation, specifically the overheat mode of operation, may also occur. For example, if there is no liquid present for the heating element 12 to heat, upon being supplied with electrical power, the heating element 12 may heat up rapidly to a high temperature. The thermistor 24, depending on its position, may not be able to detect this rapid increase in temperature, or at least may be not able to detect it quickly enough. Therefore, in this embodiment, the first and second thermally sensitive actuators 10a, 10b may be arranged to detect the temperature of the heating element 12. Upon, for example, a dry boil condition where no liquid is present, the heating element 12 will heat up rapidly and trigger at least one of the first and second thermally sensitive actuators 10a, 10b which are arranged to separate at least one of the first and second moveable electrical contacts 6a, 6b, from the corresponding first and second fixed electrical contacts 7a, 7b thereby moving them into the open position seen in Figure 1. This will break the electrical power supply circuit 2 and thus interrupt the power supply to the heating element 12 which may avoid damaging the heating element 12 and/or the appliance in which it is arranged, and which may help to avoid potential injury to a user. The thermally sensitive actuators 10a, 10b may be provided by bimetallic actuators which are designed and manufactured to operate at a specific overheat temperature.

The provision of a thermistor 24 is not essential for operation, and instead the controller 22 may control the electromechanical solenoid 18 based on another operational parameter. For example, the controller 22 may comprise an internal timer and may function to supply the electromechanical solenoid 18 with electrical power after a certain amount of time has elapsed. This may be appropriate, for example, when a known volume of liquid is heated by the heating element 12 and/or where the heating element 12 has a known power output.

In this particular embodiment, as discussed previously, a user interface (UI) 26 is also provided. The UI 26 may serve as a means, for example, for a user to set the operational parameters of the controller 22. For example, it may allow a user to change the temperature to which the heater 12 heats a liquid, and in addition or alternatively it may be used to change the amount of time for which the heating element 12 heats a liquid. A user may set these parameters prior to initiating operation of the appliance. The UI 26 may comprise, for example, a dial operatively connected to a potentiometer for setting the operational parameters. As will be appreciated, such a set of embodiments effectively forms a passive user interface which may not require a power source in order to set the operational parameter. In addition, or alternatively, the UI 26 may comprise an electronic button or touchscreen, operatively connected to the electronic controller 22, for setting the operational parameters. In this instance, the UI 26 and electronic controller 22 effectively form an active user interface which may require a power source in order to operate. This power source may, for example, be provided by a dedicated power source, e.g. a battery (not shown). The UI 26 may also comprise a display, for example provided by a LCD screen, which may output information to a user, for example the temperature measured by the thermistor 24. However, as will be appreciated, the provision of an UI 26 is optional and may be omitted.

In the embodiment seen in Figures 1 and 2, the electromechanical solenoid 18 and controller 22 and associated components are provided with electrical power by being arranged in parallel in a potential divider arrangement. However, this is not essential and instead these components may be provided with a dedicated power supply, for example a battery. Similarly, a single NTC thermistor 24 is shown, however this thermistor 24 may be omitted or additional temperature sensors may be provided.

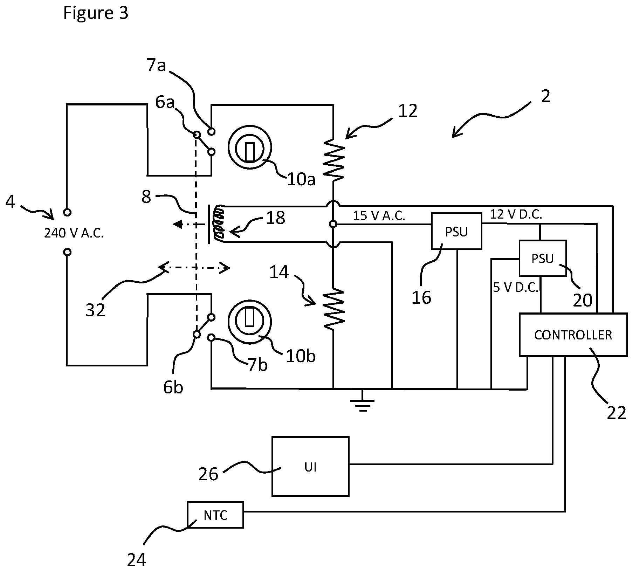

Figure 3 shows a second embodiment which is largely the same as the first embodiment, except that the push button 30 and associated tactile switch 28 are omitted and replaced by an actuation member 32 (represented schematically by a double-headed arrow). The same components arranged in the same manner as the first embodiment, seen in Figures 1 and 2, are given the same reference numerals. In this particular embodiment, the moveable member 8 can be moved by the actuation member 32 to either allow the first and second electrical contacts 6a, 6b to move into the closed position, or directly move the first and second moveable electrical contacts 6a, 6b into the closed position, and also be moved to move the first and second moveable electrical contacts 6a, 6b into an open position. Accordingly, the actuation member 32 can be used to turn the appliance ON and OFF. This bi-directional movement is provided for by an actuation member 32 which extends directly from the moveable member 8.

In either of the two embodiments described above, the power supply circuit 2 and associated components could be employed in a variety of different liquid heating appliances, specifically domestic appliances. Specifically, the heating element 12 may be arranged to heat a static volume of liquid, e.g. in the form of a kettle, or alternatively it may be arranged to heat a flow of liquid in a conduit, e.g. in the form of a flow heater.

Similarly, in either of the embodiments described above, the moveable member 8 may be provided with a resilient bias such that it is resiliently-biased towards a first position corresponding to the first and second moveable electrical contacts 6a, 6b being in an open position, or it is resilient biased towards a second position corresponding to the first and second moveable electrical contacts 6a, 6b being in a closed position. The moveable member 8 and associated resilient bias may be provided by any suitable means to achieve this bi-stable arrangement.

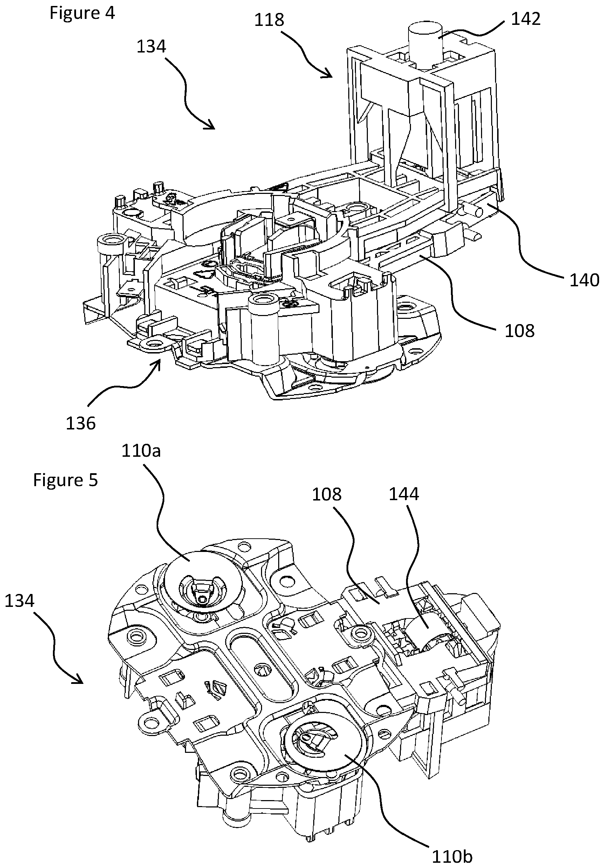

Figure 4 shows a perspective view of some of the components of a control arrangement 134 in accordance with an embodiment of the invention. The control arrangement 134 comprises a main body 136 into which a pivotally mounted moveable member 108 is mounted. Provided at a distal end 140 of the moveable member 108 is an electromechanical solenoid 118. The electromechanical solenoid 118 comprises an armature 142 which extends therefrom and is arranged to act on the distal end 140 of the moveable member 138 to drive movement thereof. The control arrangement 134 comprises moveable and fixed electrical contacts which are housed within the main body 136 and will be described in more detail below.

Figure 5 shows an underside view of the control arrangement 134. The control arrangement 134 comprises a first and second thermally sensitive actuator 110a, 110b mounted on the underside thereof. Also visible in this underside view is a spring member 144 which acts on the moveable member 108 to bias it into one of two positions, a second position in which the first and second moveable electrical contacts are in a closed position, and a first position in which the first and second moveable electrical contacts are in an open position. The provision of this spring member 144, and the pivotal mounting of the moveable member 108, achieves this bi-stable arrangement.

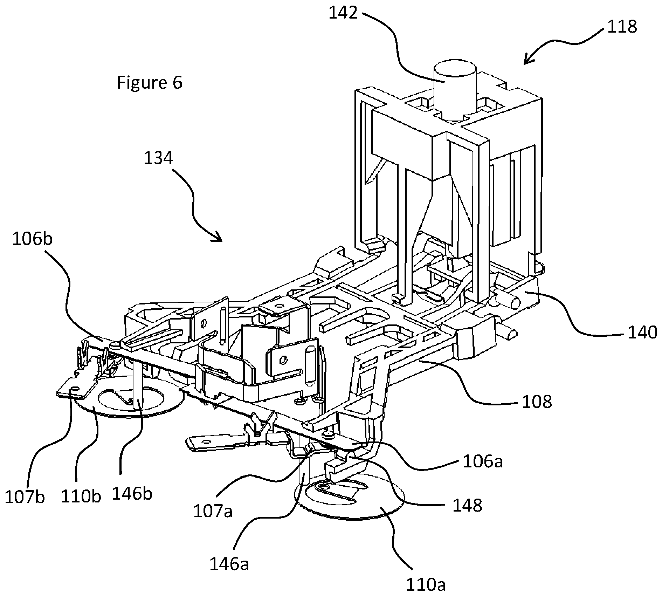

Figure 6 shows a perspective view of the control arrangement 134 with the main body 136 removed to reveal the inner components of the control arrangement 134. The control arrangement 134 comprises first and second moveable electrical contacts 106a, 106b and corresponding first and second fixed electrical contacts 107a, 107b. Each thermally sensitive actuator 110a, 110b comprises a corresponding actuation rod 146a, 146b, which are each arranged to act directly on the first and second moveable electrical contacts 106a, 106b, respectively.

The moveable member 108 comprises an interaction portion 148 which is arranged to act on the first moveable electrical contact 106a. In this particular embodiment, the moveable member 108, specifically the interaction portion 148, is only arranged to act on the first moveable electrical contact 106a, and not the second moveable electrical contact 106b. However, this is not essential, and in an alternative set of embodiments, the moveable member may comprise first and second interaction portions each arranged to act on the first and second moveable electrical contacts 106a, 106b, respectively.

When the electromechanical solenoid 118 is turned on, i.e. supplied with electrical power, the armature 142 will be driven onto the distal end 140 of the pivotally mounted moveable member 108 which will result in pivotal movement of the moveable member 108. As the distal end 140 is pivoted downwards, the interaction portion 148 will be driven upwards into contact with the first moveable electrical contact 106a and separate the first moveable electrical contact 106a from the first fixed electrical contact 107a thereby breaking the electrical power supply circuit. The first moveable electrical contact 106a may be arranged in the neutral pole of the electrical power supply.

In the embodiments described above, first and second moveable electrical contacts are provided, each of which can be moved by first and second thermally sensitive actuators respectively along with the relevant moveable member. However, as will be appreciated, the provision of two moveable electrical contacts and two associated thermally sensitive actuators is not essential, and instead only a single moveable electrical contact and associated thermally sensitive actuator may be provided. Similarly, more than two moveable electrical contacts and associated thermally sensitive actuators may be provided. Additionally, as with the embodiment described above, even where two moveable electrical contacts are provided, the moveable member may only act on one of these moveable electrical contacts in order to break the electrical power supply circuit and the other moveable electrical contact may only be acted upon by, for example, a thermally sensitive actuator.

Whilst not shown in the embodiments described above, the control assemblies described may comprise a cordless electrical connector arranged to mate with a corresponding base electrical connector to supply electrical power to the control assembly and any components electrically connected thereto.

## Claims

1. A control arrangement (134) for controlling an electrical power supply circuit (2) to a heater (12), the control arrangement (134) comprising:
a first moveable electrical contact (6a, 6b; 106a, 106b), the first moveable electrical contact (6a, 6b; 106a, 106b) mating with a corresponding first fixed electrical contact (7a, 7b; 107a, 107b) in the electrical power supply circuit (2) in a closed position and the first moveable electrical contact (6a, 6b; 106a, 106b) being separated from the first fixed electrical contact (7a, 7b; 107a, 107b) in an open position to interrupt the electrical power supply circuit (2);
a first thermally sensitive actuator (10a, 10b; 110a, 110b) operable at an overheat temperature in an overheat mode of operation to move the first moveable electrical contact (6a, 6b; 106a, 106b) from the closed position to the open position; and
an electromechanical solenoid (18; 118), comprising an inductive coil wrapped around an armature (142), and **characterised by** a solenoid control arrangement (22) for supplying the electromechanical solenoid (18; 118) with electrical power in an interrupt mode of operation such that the armature (142) operates to move the first moveable electrical contact (6a, 6b; 106a, 106b) from the closed position to the open position.

2. A control arrangement (134) according to claim 1, wherein the first moveable electrical contact (6a, 6b; 106a, 106b) is provided on a resilient member which tends towards bringing the electrical contact (6a, 6b; 106a, 106b into the closed position.

3. A control arrangement (134) according to claim 2, comprising a moveable member (8; 108) which is arranged to act on the resilient member to hold the first moveable electrical contact (6a, 6b; 106a, 106b) in the open position; and optionally wherein the moveable member (8; 108) is arranged to be moved into a position which allows the resilient member to move the first moveable electrical contact (6a, 6b; 106a, 106b) into the closed position.

4. A control arrangement (134) according to claim 3, wherein the moveable member (8; 108) is further operable to move the first moveable electrical (6a, 6b; 106a, 106b) contact into the open position; and optionally wherein the armature (142) is arranged to act on the moveable member (8; 108) so as to move the first electrical contact (6a, 6b; 106a, 106b) from the closed position into the open position.

5. A control arrangement (134) according to any one of claims 3-4, further comprising a resilient bias acting on the moveable member (8; 108) and arranged such that the moveable member (8; 108) is either resiliently biased into a first position corresponding to the first moveable electrical contact (6a, 6b; 106a, 106b) being in the open position or resiliently biased into a second position corresponding to the first moveable electrical contact (6a, 6b; 106a, 106b) being in the closed position.

6. A control arrangement (134) according to any one of claims 3-5, wherein the moveable member (8; 108) comprises a pivotally mounted lever member.

7. A control arrangement (134) according to any one of claims 3-6, further comprising a user operable member (30; 32) arranged to move the moveable member (8; 108) at least to allow the first moveable electrical contact (6a, 6b; 106a, 106b) to move to the closed position; and optionally wherein the user operable member (30; 32) is also operable to move the moveable member (8; 108) to move the first moveable electrical contact (6a, 6b; 106a, 106b) to the open position.

8. A control arrangement (134) as claimed in claim 7, further comprising a tactile switch (28) electrically connected to the solenoid control arrangement (22) and arranged such that the user operable member (30), when operated by a user, causes a change in an output of the tactile switch (28); and optionally wherein the solenoid control arrangement (22) monitors the output from the tactile switch (28) and depending on the output supplies the electromechanical solenoid (18; 118) with electrical power in the interrupt mode of operation such that the armature (142) operates to move the first moveable electrical contact (6a, 6b; 106a, 106b) from the closed position to the open position.

9. A control arrangement (134) as claimed in any preceding claim, further comprising at least one temperature sensor (24) connected to the solenoid control arrangement (22); and optionally wherein the solenoid control arrangement (22) monitors a sensor output from the temperature sensor (24) and, depending on the sensor output, supplies the electromechanical solenoid (18; 118) with electrical power in the interrupt mode of operation such that the armature (142) operates to move the first moveable electrical contact (6a, 6b; 106a, 106b) from the closed position to the open position.

10. A control arrangement (134) as claimed in any preceding claim, wherein the solenoid control arrangement (22) is programmed or arranged to supply the electromechanical solenoid (18; 118) with electrical power dependent on the amount of time that has elapsed since closing the electrical power supply circuit (2).

11. A control arrangement (134) as claimed in any preceding claim, further comprising a user input means (26) operatively connected to the solenoid control arrangement (22) for changing a condition at which the solenoid control arrangement (22) supplies the electromechanical solenoid (18; 118) with electrical power.

12. A control arrangement (134) as claimed in any preceding claim, further comprising a second moveable electrical contact (6a, 6b; 106a, 106b), the second moveable electrical contact (6a, 6b; 106a, 106b mating with a corresponding second fixed electrical contact (7a, 7b; 107a, 107b) in the electrical power supply circuit (2) in a closed position and the second moveable electrical contact (6a, 6b; 106a, 106b) being separated from the second fixed electrical contact (7a, 7b; 107a, 107b) in an open position to interrupt the electrical power supply circuit (2) in an open position, and a second thermally sensitive actuator (10a, 10b; 110a, 110b) operable at an overheat temperature in the overheat mode of operation to move the second moveable electrical contact (6a, 6b; 106a, 106b).

13. A liquid heater arrangement comprising a control arrangement (134) according to any preceding claim, a heater (12) comprising a first electrical heating element (12) comprising a first pair of electrical terminations, and a resistive element (14) comprising a second pair of electrical terminations, wherein the resistive element (14) is connected electrically in series with the first electrical heating element (12) by an electrical connection between one of the first pair of electrical terminations and one of the second pair of electrical terminations, wherein the first electrical heating element (12) has a first resistance and the resistive element (14) has a second resistance different to the first resistance, and wherein the electromechanical solenoid (18; 118) and solenoid control arrangement (22) are electrically connected between one of the first or second pairs of electrical terminations.

14. A liquid heating appliance comprising a vessel with a base heated by a heater (12) and a control arrangement (134) according to any of claims 1-12 mounted under the heated base and arranged to control an electrical power supply circuit (2) to the heater (12).

15. A liquid heating appliance comprising a liquid flow heater, the liquid flow heater comprising a heater (12) and a liquid flow tube, and a control arrangement (134) according to any of claims 1-12 arranged to control an electrical power supply circuit (2) to the heater (12).

## Patentansprüche

1. Steueranordnung (134) zum Steuern eines Stromversorgungskreises (2) zu einem Heizgerät (12), wobei die Steueranordnung (134) umfasst:
einen ersten beweglichen elektrischen Kontakt (6a, 6b; 106a, 106b), wobei der erste bewegliche elektrische Kontakt (6a, 6b; 106a, 106b) mit einem entsprechenden ersten festen elektrischen Kontakt (7a, 7b; 107a, 107b) im Stromversorgungskreis (2) in einer geschlossenen Position zusammenpasst und der erste bewegliche elektrische Kontakt (6a, 6b; 106a, 106b) in einer offenen Position vom ersten festen elektrischen Kontakt (7a, 7b; 107a, 107b) getrennt ist, um den Stromversorgungskreis (2) zu unterbrechen;
einen ersten wärmeempfindlichen Aktuator (10a, 10b; 110a, 110b), der bei einer Überhitzungstemperatur in einem Überhitzungsbetriebsmodus betreibbar ist, um den ersten beweglichen elektrischen Kontakt (6a, 6b; 106a, 106b) von der geschlossenen Position in die offene Position zu bewegen; und
eine elektromechanische Magnetspule (18; 118), die eine um einen Anker (142) gewickelte Induktionsspule umfasst und durch eine Magnetspulensteueranordnung (22) zum Versorgen der elektromechanischen Magnetspule (18; 118) mit Strom in einem Unterbrechungsbetriebsmodus gekennzeichnet ist, so dass der Anker (142) arbeitet, um den ersten beweglichen elektrischen Kontakt (6a, 6b; 106a, 106b) von der geschlossenen Position in die offene Position zu bewegen.

2. Steueranordnung (134) nach Anspruch 1, wobei der erste bewegliche elektrische Kontakt (6a, 6b; 106a, 106b) auf einem elastischen Element vorgesehen ist, das dazu neigt, den elektrischen Kontakt (6a, 6b; 106a, 106b) in die geschlossene Position zu bringen.

3. Steueranordnung (134) nach Anspruch 2, umfassend ein bewegliches Element (8; 108), das so angeordnet ist, dass es auf das elastische Element wirkt, um den ersten beweglichen elektrischen Kontakt (6a, 6b; 106a, 106b) in der offenen Position zu halten; und wobei optional das bewegliche Element (8; 108) so angeordnet ist, dass es in eine Position bewegt wird, die es dem elastischen Element ermöglicht, den ersten beweglichen elektrischen Kontakt (6a, 6b; 106a, 106b) in die geschlossene Position zu bewegen.

4. Steueranordnung (134) nach Anspruch 3, wobei das bewegliche Element (8; 108) weiter betreibbar ist, um den ersten beweglichen elektrischen Kontakt (6a, 6b; 106a, 106b) in die offene Position zu bewegen; und wobei der Anker (142) optional so angeordnet ist, dass er auf das bewegliche Element (8; 108) wirkt, um den ersten elektrischen Kontakt (6a, 6b; 106a, 106b) von der geschlossenen Position in die offene Position zu bewegen.

5. Steueranordnung (134) nach einem der Ansprüche 3-4, die weiter eine elastische Vorspannung umfasst, die auf das bewegliche Element (8; 108) wirkt und so angeordnet ist, dass das bewegliche Element (8; 108) entweder elastisch in eine erste Position vorgespannt ist, die dem ersten beweglichen elektrischen Kontakt (6a, 6b; 106a, 106b) entspricht, der sich in der offenen Position befindet, oder elastisch in eine zweite Position vorgespannt ist, die dem ersten beweglichen elektrischen Kontakt (6a, 6b; 106a, 106b) entspricht, der sich in der geschlossenen Position befindet.

6. Steueranordnung (134) nach einem der Ansprüche 3-5, wobei das bewegliche Element (8; 108) ein schwenkbar montiertes Hebelelement umfasst.

7. Steueranordnung (134) nach einem der Ansprüche 3-6, die weiter ein vom Benutzer betätigbares Element (30; 32) umfasst, das so angeordnet ist, dass es das bewegliche Element (8; 108) bewegt, um zumindest dem ersten beweglichen elektrischen Kontakt (6a, 6b; 106a, 106b) zu ermöglichen, sich in die geschlossene Position zu bewegen; und wobei optional das vom Benutzer betätigbare Element (30; 32) auch betätigbar ist, um das bewegliche Element (8; 108) zu bewegen, um den ersten beweglichen elektrischen Kontakt (6a, 6b; 106a, 106b) in die offene Position zu bewegen.

8. Steueranordnung (134) nach Anspruch 7, die weiter einen Tastschalter (28) umfasst, der elektrisch mit der Magnetspulensteueranordnung (22) verbunden und so angeordnet ist, dass das vom Benutzer betätigbare Element (30) bei Betätigung durch einen Benutzer eine Änderung einer Ausgabe des Tastschalters (28) bewirkt; und wobei optional die Magnetspulensteueranordnung (22) die Ausgabe des Tastschalters (28) überwacht und abhängig von der Ausgabe die elektromechanische Magnetspule (18; 118) im Unterbrechungsbetriebsmodus mit Strom versorgt, so dass der Anker (142) arbeitet, um den ersten beweglichen elektrischen Kontakt (6a, 6b; 106a, 106b) von der geschlossenen Position in die offene Position zu bewegen.

9. Steueranordnung (134) nach einem der vorstehenden Ansprüche, weiter umfassend mindestens einen Temperatursensor (24), der mit der Magnetspulensteueranordnung (22) verbunden ist; und wobei optional die Magnetspulensteueranordnung (22) eine Sensorausgabe des Temperatursensors (24) überwacht und abhängig von der Sensorausgabe die elektromechanische Magnetspule (18; 118) im Unterbrechungsbetriebsmodus mit Strom versorgt, so dass der Anker (142) arbeitet, um den ersten beweglichen elektrischen Kontakt (6a, 6b; 106a, 106b) von der geschlossenen Position in die offene Position zu bewegen.

10. Steueranordnung (134) nach einem der vorstehenden Ansprüche, wobei die Magnetspulensteueranordnung (22) so programmiert oder angeordnet ist, dass sie die elektromechanische Magnetspule (18; 118) abhängig von der Zeitspanne, die seit dem Schließen des Stromversorgungskreises (2) verstrichen ist, mit Strom versorgt.

11. Steueranordnung (134) nach einem der vorstehenden Ansprüche, die weiter ein Benutzereingabemittel (26) umfasst, das operativ mit der Magnetspulensteueranordnung (22) verbunden ist, um einen Zustand zu ändern, in dem die Magnetspulensteueranordnung (22) die elektromechanische Magnetspule (18; 118) mit Strom versorgt.

12. Steueranordnung (134) nach einem der vorstehenden Ansprüche, die weiter einen zweiten beweglichen elektrischen Kontakt (6a, 6b; 106a, 106b) umfasst, wobei der zweite bewegliche elektrische Kontakt (6a, 6b; 106a, 106b) mit einem entsprechenden zweiten festen elektrischen Kontakt (7a, 7b; 107a, 107b) im Stromversorgungskreis (2) in einer geschlossenen Position zusammenpasst und der zweite bewegliche elektrische Kontakt (6a, 6b; 106a, 106b) vom zweiten festen elektrischen Kontakt (7a, 7b; 107a, 107b) in einer offenen Position getrennt ist, um den Stromversorgungskreis (2) in einer offenen Position zu unterbrechen, und einen zweiten wärmeempfindlichen Aktuator (10a, 10b; 110a, 110b), der im Überhitzungsbetriebsmodus bei einer Überhitzungstemperatur betreibbar ist, um den zweiten beweglichen elektrischen Kontakt (6a, 6b; 106a, 106b) zu bewegen.

13. Flüssigkeitsheizanordnung, die eine Steueranordnung (134) nach einem der vorstehenden Ansprüche, ein Heizgerät (12), das ein erstes elektrisches Heizelement (12) umfasst, das ein erstes Paar elektrischer Anschlüsse umfasst, und ein Widerstandselement (14) umfasst, das ein zweites Paar elektrischer Anschlüsse umfasst, wobei das Widerstandselement (14) durch eine elektrische Verbindung zwischen einem des ersten Paares elektrischer Anschlüsse und einem des zweiten Paares elektrischer Anschlüsse elektrisch in Reihe mit dem ersten elektrischen Heizelement (12) verbunden ist, wobei das erste elektrische Heizelement (12) einen ersten Widerstand aufweist und das Widerstandselement (14) einen zweiten Widerstand aufweist, der sich vom ersten Widerstand unterscheidet, und wobei die elektromechanische Magnetspule (18; 118) und die Magnetspulensteueranordnung (22) elektrisch zwischen einem des ersten oder zweiten Paares elektrischer Anschlüsse verbunden sind.

14. Flüssigkeitsheizgerät, umfassend ein Gefäß mit einer durch ein Heizgerät (12) beheizten Basis und einer Steueranordnung (134) nach einem der Ansprüche 1-12, die unter der beheizten Basis montiert und so angeordnet ist, dass sie einen Stromversorgungskreis (2) zu dem Heizgerät (12) steuert.

15. Flüssigkeitsheizgerät, das einen Flüssigkeitsdurchflusserhitzer, wobei der Flüssigkeitsdurchflusserhitzer ein Heizgerät (12) und ein Flüssigkeitsdurchflussrohr umfasst, und eine Steueranordnung (134) nach einem der Ansprüche 1-12 umfasst, die so angeordnet ist, dass sie einen Stromversorgungskreis (2) zu dem Heizgerät (12) steuert.

## Revendications

1. Agencement de commande (134) destiné à commander un circuit d'alimentation électrique (2) vers un dispositif de chauffage (12), l'agencement de commande (134) comprenant :
un premier contact électrique mobile (6a, 6b ; 106a, 106b), le premier contact électrique mobile (6a, 6b ; 106a, 106b) s'accouplant avec un premier contact électrique fixe (7a, 7b ; 107a, 107b) correspondant dans le circuit d'alimentation électrique (2) dans une position fermée et le premier contact électrique mobile (6a, 6b ; 106a, 106b) étant séparé du premier contact électrique fixe (7a, 7b ; 107a, 107b) dans une position ouverte pour interrompre le circuit d'alimentation électrique (2) ;
un premier actionneur thermosensible (10a, 10b ; 110a, 110b) étant actionnable à une température de surchauffe dans un mode de fonctionnement avec surchauffe pour déplacer le premier contact électrique mobile (6a, 6b ; 106a, 106b) de la position fermée à la position ouverte ; et
un solénoïde électromécanique (18 ; 118), comprenant une bobine inductive enroulée autour d'un induit (142), et **caractérisé par** un agencement de commande de solénoïde (22) destiné à alimenter le solénoïde électromécanique (18 ; 118) en énergie électrique dans un mode de fonctionnement avec interruption de sorte que l'induit (142) fonctionne pour déplacer le premier contact électrique mobile (6a, 6b ; 106a, 106b) de la position fermée à la position ouverte.

2. Agencement de commande (134) selon la revendication 1, dans lequel le premier contact électrique mobile (6a, 6b ; 106a, 106b) est prévu sur un élément élastique qui tend à amener le contact électrique (6a, 6b ; 106a, 106b) dans la position fermée.

3. Agencement de commande (134) selon la revendication 2, comprenant un élément mobile (8 ; 108) qui est agencé pour agir sur l'élément élastique pour maintenir le premier contact électrique mobile (6a, 6b ; 106a, 106b) dans la position ouverte ; et éventuellement dans lequel l'élément mobile (8 ; 108) est agencé pour être déplacé dans une position qui permet à l'élément élastique de déplacer le premier contact électrique mobile (6a, 6b ; 106a, 106b) dans la position fermée.

4. Agencement de commande (134) selon la revendication 3, dans lequel l'élément mobile (8 ; 108) est en outre actionnable pour déplacer le premier contact électrique mobile (6a, 6b ; 106a, 106b) dans la position ouverte ; et éventuellement dans lequel l'induit (142) est agencé pour agir sur l'élément mobile (8 ; 108) de manière à déplacer le premier contact électrique (6a, 6b ; 106a, 106b) de la position fermée à la position ouverte.

5. Agencement de commande (134) selon l'une quelconque des revendications 3-4, comprenant en outre une sollicitation élastique agissant sur l'élément mobile (8 ; 108) et agencée de telle sorte que l'élément mobile (8 ; 108) soit sollicité élastiquement dans une première position correspondant au premier contact électrique mobile (6a, 6b ; 106a, 106b) étant en position ouverte, soit sollicité élastiquement dans une seconde position correspondant au premier contact électrique mobile (6a, 6b ; 106a, 106b) étant en position fermée.

6. Agencement de commande (134) selon l'une quelconque des revendications 3-5, dans lequel l'élément mobile (8 ; 108) comprend un élément levier monté de manière pivotante.

7. Agencement de commande (134) selon l'une quelconque des revendications 3-6, comprenant en outre un élément actionnable par l'utilisateur (30 ; 32) agencé pour déplacer l'élément mobile (8 ; 108) au moins pour permettre au premier contact électrique mobile (6a, 6b ; 106a, 106b) de se déplacer vers la position fermée ; et éventuellement dans lequel l'élément actionnable par l'utilisateur (30 ; 32) peut également être actionné pour déplacer l'élément mobile (8 ; 108) afin de déplacer le premier contact électrique mobile (6a, 6b ; 106a, 106b) vers la position ouverte.

8. Agencement de commande (134) selon la revendication 7, comprenant en outre un commutateur tactile (28) connecté électriquement à l'agencement de commande de solénoïde (22) et agencé de telle sorte que l'élément actionnable par l'utilisateur (30), lorsqu'il est actionné par un utilisateur, provoque un changement d'une sortie du commutateur tactile (28) ; et éventuellement dans lequel l'agencement de commande de solénoïde (22) surveille la sortie du commutateur tactile (28) et en fonction de la sortie, alimente le solénoïde électromécanique (18 ; 118) en énergie électrique dans le mode de fonctionnement avec interruption de telle sorte que l'induit (142) fonctionne pour déplacer le premier contact électrique mobile (6a, 6b ; 106a, 106b) de la position fermée à la position ouverte.

9. Agencement de commande (134) selon une quelconque revendication précédente, comprenant en outre au moins un capteur de température (24) connecté à l'agencement de commande de solénoïde (22) ; et éventuellement dans lequel l'agencement de commande de solénoïde (22) surveille une sortie de capteur provenant du capteur de température (24) et, en fonction de la sortie du capteur, alimente le solénoïde électromécanique (18 ; 118) en énergie électrique dans le mode de fonctionnement avec interruption de telle sorte que l'induit (142) fonctionne pour déplacer le premier contact électrique mobile (6a, 6b ; 106a, 106b) de la position fermée à la position ouverte.

10. Agencement de commande (134) selon une quelconque revendication précédente, dans lequel l'agencement de commande de solénoïde (22) est programmé ou agencé pour alimenter le solénoïde électromécanique (18; 118) en énergie électrique en fonction de la quantité de temps qui s'est écoulée depuis la fermeture du circuit d'alimentation électrique (2).

11. Agencement de commande (134) selon une quelconque revendication précédente, comprenant en outre un moyen d'entrée utilisateur (26) connecté de manière fonctionnelle à l'agencement de commande de solénoïde (22) pour modifier une condition dans laquelle l'agencement de commande de solénoïde (22) alimente le solénoïde électromécanique (18; 118) en énergie électrique.

12. Agencement de commande (134) selon une quelconque revendication précédente, comprenant en outre un second contact électrique mobile (6a, 6b ; 106a, 106b), le second contact électrique mobile (6a, 6b ; 106a, 106b) s'accouplant avec un second contact électrique fixe (7a, 7b ; 107a, 107b) correspondant dans le circuit d'alimentation électrique (2) dans une position fermée et le second contact électrique mobile (6a, 6b ; 106a, 106b) étant séparé du second contact électrique fixe (7a, 7b ; 107a, 107b) dans une position ouverte pour interrompre le circuit d'alimentation électrique (2) dans une position ouverte, et un second actionneur thermosensible (10a, 10b ; 110a, 110b) pouvant être actionné à une température de surchauffe dans le mode de fonctionnement avec surchauffe pour déplacer le second contact électrique mobile (6a, 6b ; 106a, 106b).

13. Agencement de dispositif de chauffage de liquide comprenant un agencement de commande (134) selon une quelconque revendication précédente, un dispositif de chauffage (12) comprenant un premier élément chauffant électrique (12) comprenant une première paire de terminaisons électriques, et un élément résistif (14) comprenant une seconde paire de terminaisons électriques, dans lequel l'élément résistif (14) est connecté électriquement en série avec le premier élément chauffant électrique (12) par une connexion électrique entre l'une de la première paire de terminaisons électriques et l'une de la seconde paire de terminaisons électriques, dans lequel le premier élément chauffant électrique (12) présente une première résistance et l'élément résistif (14) présente une seconde résistance différente de la première résistance, et dans lequel le solénoïde électromécanique (18 ; 118) et l'agencement de commande de solénoïde (22) sont connectés électriquement entre l'une des première ou seconde paires de terminaisons électriques.

14. Appareil de chauffage de liquide comprenant un récipient avec une base chauffée par un dispositif de chauffage (12) et un agencement de commande (134) selon l'une quelconque des revendications 1-12, monté sous la base chauffée et agencé pour commander un circuit d'alimentation électrique (2) vers le dispositif de chauffage (12).

15. Appareil de chauffage de liquide comprenant un dispositif de chauffage d'écoulement de liquide, le dispositif de chauffage d'écoulement de liquide comprenant un dispositif de chauffage (12) et un tube d'écoulement de liquide, et un agencement de commande (134) selon l'une quelconque des revendications 1-12 agencé pour commander un circuit d'alimentation électrique (2) vers le dispositif de chauffage (12).
